# EUROPÄISCHE PATENTSCHRIFT

(11) **EP 2 215 442 B1**
(45) Veröffentlichungstag und Bekanntmachung des Hinweises auf die Patenterteilung: **13.07.2016**
(21) Anmeldenummer: 08855854.9
(22) Anmeldetag: 02.12.2008
(51) Int. Cl.: G01K 1/20, G01K 7/02, G01K 7/16

(54) **VORRICHTUNG ZUR BESTIMMUNG UND/ODER ÜBERWACHUNG DER TEMPERATUR**
DEVICE FOR DETERMINING AND/OR MONITORING TEMPERATURE
DISPOSITIF POUR DÉTERMINER ET/OU SURVEILLER LA TEMPÉRATURE

(30) Priorität: 03.12.2007 DE 102007058410
(43) Veröffentlichungstag der Anmeldung: 11.08.2010
(73) Patentinhaber: Innovative Sensor Technology IST AG, 9630 Wattvil (CH)
(72) Erfinder: TARAS, Petr, CH-9630 Wattwil (CH)
(74) Vertreter: Andres, Angelika Maria
(86) Internationale Anmeldenummer: PCT/EP2008/066654
(87) Internationale Veröffentlichungsnummer: WO 2009/071555

(56) Entgegenhaltungen:
- DE-C1- 19 540 194
- US-A- 4 936 690
- US-A- 5 130 640
- US-A- 5 872 362

## Beschreibung

Die Erfindung bezieht sich auf eine Vorrichtung zur Bestimmung und/oder Überwachung mindestens der Temperatur, wobei mindestens ein Temperatursensor vorgesehen ist, und wobei der Temperatursensor mit mindestens einem ersten elektrischen Leiter kontaktiert ist.

DE 195 40 194 C 1 Beschreibt ein Widerstandsthermometer mit einem Messwiderstand in Form einer Widerstandsschicht.

Üblicherweise gilt, dass beispielsweise ein Kontaktthermometer selten genau die Temperatur des zu messenden Objekts übernimmt. Ein Stabthermometer leitet die Wärme aus dem Medium hinaus bzw. hinein, wobei dies abhängig ist vom Temperaturunterschied zwischen dem Objekt und der Umgebung, von der Eintauchtiefe des Thermometers in das Medium und auch von der thermischen Leitfähigkeit des Stabs selbst. Misst das Thermometer die Oberflächentemperatur eines Objekts, so ist die Temperatur vom Thermometer selbst beeinflusst. Dabei hängt der Messfehler von der konkreten Anordnung ab, sowie auch von der Wahl der Materialien, Geometrie usw. Es gibt somit viele Einflussgrößen, welche der exakten Temperaturmessung hinderlich sind bzw. diese beeinflussen.

Eine Möglichkeit besteht darin, beim jeweiligen Temperaturmessgerät die Abweichung vom eigentlichen Messwert zu ermitteln und ggf. durch eine Kalibrierung für die Anwendung zu korrigieren. So wird beispielsweise während der Kalibrierung das Temperaturverhalten des Sensorelements ausgemessen und die passenden Kalibrierungswerte werden in einem Speicher hinterlegt.

Die Aufgabe der Erfindung besteht darin, ein Temperaturmessgerät vorzuschlagen, bei welchem die in der Anwendung auftretenden Temperaturmessfehler möglichst einfach kompensiert werden.

Die Aufgabe wird erfindungsgemäß dadurch gelöst, dass der erste elektrische Leiter und der Temperatursensor derartig ausgestaltet und aufeinander abgestimmt sind, dass sich beim Vorliegen einer Temperaturdifferenz eine Thermospannung ergibt. Die Temperaturdifferenz besteht dabei zumindest zwischen einem Teil des Temperatursensors und der elektrischen Leitung.

Eine Ausgestaltung beinhaltet, dass der erste elektrische Leiter und der Temperatursensor derartig ausgestaltet und aufeinander abgestimmt sind, dass sich beim Vorliegen einer Temperaturdifferenz eine vorgebbare Thermospannung ergibt. Die Thermospannung ist insoweit vorgegeben oder eingestellt bzw. ausgewählt, als dass bei einer vorherrschenden Temperaturdifferenz eine entsprechende Thermospannung auftritt. Diese Zuordnung ist dabei möglich, da von den meisten Material- bzw. Metallkombinationen die auftretende Thermospannung bekannt ist.

Bei Thermoelementen handelt es sich um Bauteile aus beispielsweise zwei unterschiedlichen und an einem Ende miteinander verbundenen Metallen. An den freien Enden der beiden miteinander verbundenen Leiter wird bei einer Temperaturdifferenz entlang der Leiter aufgrund des Seebeck-Effekts eine elektrische Spannung - die Thermospannung - erzeugt. Die Verbindungsstelle und die freien Enden müssen somit für das Erzielen des Effekts unterschiedliche Temperaturen aufweisen. Handelt es sich bei dem Temperatursensor beispielsweise um ein Widerstandselement, dessen temperaturabhängiger Widerstandswert für die Temperaturmessung verwendet wird, so tritt der Thermoeffekt üblicherweise aufgrund der elektrischen Kontaktierung, z.B. über die elektrischen Leiter-z.B. Kabel oder Litzen - auf. Da der Thermoeffekt die eigentliche Messung des Widerstandswerts verfälscht, wird es meistens versucht, ihn mit sorgfältiger Materialienwahl und Technologie zu vermeiden.

Die Erfindung geht nun den umgekehrten Weg, dass gerade das Auftreten des Thermoeffekts angestrebt wird. Diese gezielte Ausnutzung des Effekts bietet dabei eine sehr einfache, preisgünstige und effektive Lösung. Die thermoelektrische Spannung ist dabei im Wesentlichen proportional dem Temperaturunterschied zwischen dem Sensor (heißes Ende) und der Umgebung (das kalte Ende der Leiter). Der Messfehler des Temperatursensors wird somit erfindungsgemäß mittels Thermospannung korrigiert. Das Maß der Korrektur wird dabei durch die Größe der Thermospannung vorgegeben, welche wiederum durch die Wahl der verwendeten Materialien vorgebbar ist. Mit anderen Worten: In einer Variante wird aus den Möglichkeiten der Materialkombinationen, welche jeweils eine - auch von der Temperaturdifferenz abhängige - Thermospannung erzeugen, eine Kombination ausgewählt, welche mit einer gewünschten oder für die Anwendung des Temperatursensors erforderlichen Thermospannung einhergeht. Praktisch formuliert: Wenn bekannt ist, dass die Temperatur, welche der Sensor erfährt, um X °C von der eigentlichen zu messenden bzw. zu überwachenden Temperatur abweicht, so wird vorzugsweise eine Metallkombination ausgesucht, welche bei der Temperaturdifferenz eine Thermospannung erzeugt, die gerade eine Korrektur des Messwertes um diese Differenz bewirkt. In einer alternativen Ausgestaltung erzeugt die Temperaturdifferenz zwischen der eigentlichen, z.B. Mediumstemperatur und der am Temperatursensor herrschenden Temperatur eine Thermospannung, welche entsprechend ausgelesen und für die Bestimmung der Temperatur in Verbindung mit dem Messwert des Temperatursensors herangezogen wird. Somit gibt es zumindest zwei grundlegende Varianten:
Entweder dient die Thermospannung einer direkten Korrektur des Messwertes oder die Thermospannung wird separat bestimmt und dient der nachträglichen Korrektur. Dabei wird in einer Ausgestaltung die Thermospannung separat ausgemessen und anhand des vom Temperatursensor ermittelten Temperaturwerts wird die Temperatur bestimmt bzw. insbesondere berechnet. In einer weiteren Ausgestaltung wird der Widerstandswert des Temperatursensors ermittelt und die Thermospannung erzeugt einen Offset, welcher direkt dazu führt, dass ein anderer Widerstandwert für den Temperatursensor bestimmt wird.

Eine Ausgestaltung sieht vor, dass der Temperatursensor mit mindestens einem zweiten elektrischen Leiter kontaktiert ist, und dass der erste elektrische Leiter und der zweite elektrische Leiter und der Temperatursensor derartig ausgestaltet und aufeinander abgestimmt sind, dass sich beim Vorliegen einer Temperaturdifferenz eine vorgebbare Thermospannung ergibt. Der Temperatursensor ist somit zwischen zwei elektrischen Leitern, z.B. Kabeln oder Litzen angeordnet und die beiden Leiter und der Sensor sind derartig ausgestaltet und aufeinander abgestimmt, dass beim Vorliegen einer Temperaturdifferenz zwischen den Leitern und dem Sensor eine durch die Wahl der verwendeten Materialien in ihrer Größe einstellbare Thermospannung auftritt. Die Thermospannung ist dabei vorzugsweise derartig eingestellt, dass gerade der Temperaturfehler, der durch die unterschiedlichen thermischen Effekte bei der Messung mit dem Temperatursensor auftritt, zumindest teilweise kompensiert wird.

In einer weiteren Alternative wird der Peltier-Effekt eingesetzt, so dass eine Selbsterwärmung des Temperatursensors reduziert wird. Der Sensor kann dann mit einem deutlich größeren Strom belastet werden, was beispielsweise für einen besseren Signal-Rausch-Abstand sorgt.

Die Leiter werden dabei direkt beispielsweise über Kontaktflächen ("Pads") mit dem aktiven Element, d.h. dem Temperatursensor verbunden, beispielsweise verschweißt. Das Thermoelement entsteht bzw. im Falle der beiden elektrischen Leiter: die zwei Thermoelemente entstehen also als Teil des Widerstandstemperatursensors, wenn es sich bei dem Temperatursensor um einen Widerstandstemperatursensor handelt. Das Ausmaß der Korrektur durch die Thermospannung wird vor allem durch die Wahl der Leiter beeinflusst, hängt aber von vielen anderen Parametern ab, wie z.B. Drahtlänge (Temperaturgradient am Thermoelement kann dadurch kleiner als der gesamte Unterschied sein und so auch die Korrektur), Messstrom, Nennwiderstand des Thermometers und einige anderen.

Eine Ausgestaltung beinhaltet, dass es sich bei dem Temperatursensor um mindestens ein temperaturabhängiges Widerstandselement handelt. Beispielsweise handelt es sich um eine in Dünn- oder Dickschichttechnik, z.B. als Mäander aufgetragene Leiterbahnstruktur.

Eine Ausgestaltung ist derartig, dass mindestens der erste elektrische Leiter und zumindest der Verbindungsbereich des Temperatursensors mit dem ersten elektrischen Leiter im Wesentlichen aus unterschiedlichen Materialien bestehen und/oder dass mindestens der zweite elektrische Leiter und zumindest der Verbindungsbereich des Temperatursensors mit dem zweiten elektrischen Leiter im Wesentlichen aus unterschiedlichen Materialien bestehen. In dieser Ausgestaltung wird somit betont, dass jeweils eine Verbindung zwischen unterschiedlichen Materialien, z.B. unterschiedlichen Metallen besteht, wodurch jeweils ein Thermoelement gebildet wird.

In einer weiteren Ausgestaltung ist der Thermosensor und der erste Leiter oder der zweite Leiter im Wesentlichen aus einem unterschiedlichen Material ausgestaltet.

Eine Ausgestaltung sieht vor, dass der erste elektrische Leiter und der zweite elektrische Leiter im Wesentlichen aus unterschiedlichen Materialien bestehen. Bei den Materialen handelt es sich beispielsweise um Metalle.

Eine Ausgestaltung beinhaltet, dass der Temperatursensor im Wesentlichen aus Platin besteht.

Eine Ausgestaltung sieht vor, dass der erste elektrische Leiter im Wesentlichen aus Platin besteht, und dass der zweite elektrische Leiter im Wesentlichen aus Platin mit einem Anteil von Rhodium besteht. Besteht der Temperatursensor ebenfalls im Wesentlichen aus Platin, so bestehen in dieser Ausgestaltung der Sensor und ein elektrischer Leiter im Wesentlichen aus dem gleichen Material bzw. Metall. Der zweite Leiter weist dabei einen Anteil von Rhodium, beispielsweise von 10% auf.

Eine Ausgestaltung beinhaltet, dass der erste elektrische Leiter im Wesentlichen aus Nickel besteht, und dass der zweite elektrische Leiter im Wesentlichen aus Platin besteht.

Eine Ausgestaltung sieht vor, dass der erste elektrische Leiter im Wesentlichen aus einer Nickel-Chrom-Legierung besteht, und dass der zweite elektrische Leiter im Wesentlichen aus einer Nickel-Aluminium- Legierung besteht.

Die Erfindung wird anhand der nachfolgenden Zeichnung näher erläutert. Es zeigt:

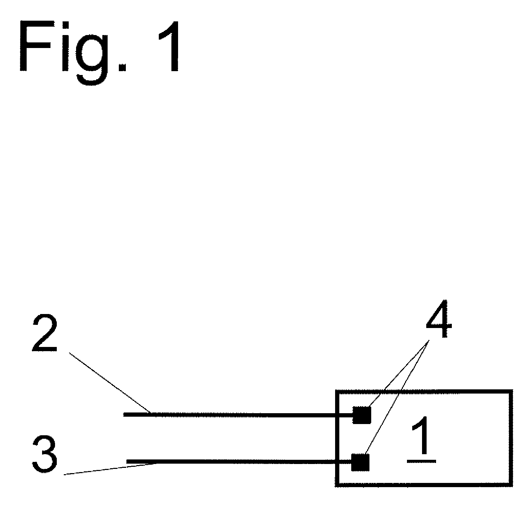

Fig. 1: eine schematische Darstellung des Temperatursensors und zweier elektrischer Anschlussleitungen als Bestandteile einer erfindungsgemäßen Vorrichtung zur Bestimmung und/oder Überwachung der Temperatur.

In der Fig. 1 ist schematisch eine Vorrichtung zur Bestimmung und/oder Überwachung einer Temperatur dargestellt. Dabei ist beispielsweise die Temperatur die eigentlich interessierende Größe oder über die Temperatur wird beispielsweise der Durchfluss eines Mediums überwacht und/oder bestimmt. Insbesondere handelt es sich um ein Kontaktthermometer, welches in direkten Kontakt mit dem Objekt kommt, dessen Temperatur es zu messen gilt.

Für das Betreiben des Temperatursensors 1 und somit auch für das Auslesen des Messwertes ist der Sensor 1 mit einem ersten elektrischen Leiter 2 und einem zweiten elektrischen Leiter 3 über die beiden Verbindungsbereiche 4 (Löt- oder Schweißstellen) elektrisch und mechanisch kontaktiert. Der Messwert wird beispielsweise dadurch bestimmt, dass der Sensor 1 mit einer Wechselspannung beaufschlagt wird und dass der sich einstellende Strom gemessen wird. Als Messwert ergibt sich dann der elektrische Widerstandswert des Sensors 1. Aus diesem Widerstandswert lässt sich über einen entsprechend hinterlegten oder bekannten Zusammenhang zwischen Temperatur und Widerstand die Temperatur bestimmen bzw. überwachen.

Eine Problematik bei der Temperaturmessung besteht üblicherweise darin, dass der eigentliche Temperatursensor 1 nicht direkt die eigentliche zu messende bzw. zu bestimmende Temperatur erfährt, sondern eine Temperatur unterhalb oder oberhalb dieses Wertes. So ist es in vielen Anwendungsfällen vorgesehen, dass der Temperatursensor 1 von einem Schutzrohr umgeben ist, welches üblicherweise auch eine Abschirmung der Temperatur bewirkt. In anderen Fällen kann es auch sein, dass das Medium oder der Träger, auf welchem der Temperatursensor 1 zur Stabilisierung fixiert ist, selbst eine Temperaturableitung bewirkt. Dies führt somit jeweils zu einer Herabsenkung der Temperatur, welche der Temperatursensor 1 selbst erfährt. Damit geht wiederum einher, dass die Temperatur, welche von dem Temperatursensor gemessen wird, unterhalb der eigentlichen Temperatur liegt. D.h. durch die intrinsischen Schwierigkeiten bei der Temperaturübertragung kommt es automatisch zu Messfehlern.

Handelt es sich wie hier beispielsweise bei dem Temperatursensor 1 um ein temperaturabhängiges Widerstandselement, so ist es auch möglich, dass der Strom, welcher durch den Temperatursensor 1 fließt, eine Temperaturerhöhung des Sensors 1 bewirkt und somit auch Auswirkungen auf die eigentliche Messung hat. In diesem Fall misst der Temperatursensor 1 somit eine Temperatur, welche oberhalb der eigentlichen zu messenden bzw. zu überwachenden Temperatur liegt.

Im Stand der Technik ist es daher üblich, Temperatursensoren zu kalibrieren und die eigentlichen Messwerte - bei den Widerstandsthermometern handelt es sich um den elektrischen Widerstandswert - mit den entsprechend hinterlegten Kalibrierwerten abzugleichen.

Entsprechend einer Ausgestaltung der Erfindung bestehen der erste elektrische Leiter 2 und der zweite elektrische Leiter 3 aus unterschiedlichen Materialien, welche derartig gewählt sind, dass sich in Verbindung mit dem Temperatursensor 1 der Thermoeffekt einstellt, welcher beim Vorliegen einer Temperaturdifferenz bzw. eines Temperaturgradienten eine Thermospannung erzeugt. Ein solcher Temperaturgradient ist beispielsweise die Folge des Unterschiedes zwischen der eigentlichen Temperatur und der am Temperatursensor 1 anliegenden Temperatur. Erfindungsgemäß wird somit ausgenutzt, dass die Temperaturdifferenz zwischen der eigentlichen Temperatur und der am Temperatursensor 1 herrschenden Temperatur in einen Messeffekt umgewandelt wird. Dieser Messeffekt durch die Ausnutzung des bestehenden Temperaturgradienten kann dabei separat ausgewertet werden oder die - beispielsweise genanntes- Erhöhung der Spannung durch den Thermoeffekt wird sogleich bei der Bestimmung des Widerstandswerts verwendet, indem sich über den Zusammenhang zwischen Spannung und Widerstand auch ein höherer Widerstandswert ergibt.

Im Stand der Technik ist es bereits bekannt, dass der Thermoeffekt in den Fällen auftreten kann, dass unterschiedliche Materialien verwendet werden, was üblicherweise dann vorkommt, wenn ein Temperatursensor nicht mit den Leitern aus dem gleichen Material verbunden werden kann. Im Stand der Technik wird daher große Sorge dafür getragen, dass der Temperatureffekt möglichst nicht auftritt bzw. dass er nur sehr gering ist bzw. dass er als negativer Effekt bekannt und durch Kalibration erfasst wird. Die Erfindung geht somit den umgekehrten Weg bzw. den Weg, welchen der Stand der Technik zu vermeiden sucht, dass der Temperaturfehler, welcher sich durch die thermische Übertragung bzw. durch thermische Isolation ergibt, durch den Einsatz von unterschiedlichen Materialien über den Temperatureffekt gerade kompensiert wird.

Die Wahl der Verbindungsleitungen und deren Abgleich in Bezug auf den Temperatursensor sind beispielsweise jeweils in Abhängigkeit vom Anwendungsbereich zu treffen. Ist somit beispielsweise zu erwarten, dass der Temperatursensor stärker von der eigentlichen Temperatur isoliert ist, so ist eine Kombination der Leitung zu wählen, welche einen höheren Effekt der Thermospannung zeigt. Umgekehrt ist es auch möglich, dass in dem Fall, dass die Verwendung höherer Stromstärken bei der Ausmessung des Temperatursensors beabsichtigt sind, die Materialien der Verbindungsleitung derartig gewählt werden, dass die Selbsterwärmung des Temperatursensors gerade kompensiert wird. Die Ausgestaltung der Leitungen 2, 3 bzw. des Sensors 1 bzw. der jeweilige Abgleich ist somit so zu wählen, dass die entstehende Thermospannung vorzugsweise den Temperaturfehler gerade kompensiert.

In der Umsetzung kann die Erfindung in der einen Ausgestaltung derartig verwendet werden, dass die Thermospannung einen Offset verursacht, welcher passend bei der Auswertung des Signals des Temperatursensors eine andere Temperatur widerspiegelt. In einer weiteren Ausgestaltung werden die Thermospannung und der Widerstandswert des Temperatursensors separat ausgelesen und entsprechend in einer Regel- und Auswerteeinheit miteinander verrechnet, so dass sich die eigentliche Temperatur bestimmen lässt.

### Bezugszeichenliste

- 1: Temperatursensor
- 2: Erster elektrischer Leiter
- 3: Zweiter elektrischer Leiter
- 4: Verbindungsbereich

## Patentansprüche

1. Vorrichtung zur Bestimmung und/oder Überwachung mindestens der Temperatur,
wobei mindestens ein Temperatursensor (1) vorgesehen ist, bei welchem es sich um mindestens ein temperaturabhängiges Widerstandselement handelt [Anspruch 5]
und
wobei der Temperatursensor (1) mit mindestens einem ersten elektrischen Leiter (2) kontaktiert ist,
**dadurch gekennzeichnet,**
**dass** der erste elektrische Leiter (2) und der Temperatursensor (1) derartig ausgestaltet und aufeinander abgestimmt sind, dass sich beim Vorliegen einer Temperaturdifferenz zwischen zumindest einem Teil des Temperatursensors (1) und dem elektrischen Leiter (2) eine vorgebbare Thermospannung ergibt.

2. Vorrichtung nach Anspruch 1,
**dadurch gekennzeichnet,**
**dass** der Temperatursensor (1) mit mindestens einem zweiten elektrischen Leiter (3) kontaktiert ist,
und
**dass** der erste elektrische Leiter (2) und der zweite elektrische Leiter (3) und der Temperatursensor (1) derartig ausgestaltet und aufeinander abgestimmt sind, dass sich beim Vorliegen einer Temperaturdifferenz zwischen den Leitern (2, 3) und dem Temperatursensor (1) eine vorgebbare Thermospannung ergibt.

3. Vorrichtung nach Anspruch 2,
**dadurch gekennzeichnet,**
**dass** mindestens der erste elektrische Leiter (2) und zumindest der Verbindungsbereich (4) des Temperatursensors (1) mit dem ersten elektrischen Leiter (2) im Wesentlichen aus unterschiedlichen Materialien bestehen
und/oder
**dass** mindestens der zweite elektrische Leiter (3) und zumindest der Verbindungsbereich (4) des Temperatursensors (1) mit dem zweiten elektrischen Leiter (3) im Wesentlichen aus unterschiedlichen Materialien bestehen.

4. Vorrichtung nach mindestens einem der Ansprüche 2 bis 3,
**dadurch gekennzeichnet,**
**dass** der erste elektrische Leiter (2) und der zweite elektrische Leiter (3) im Wesentlichen aus unterschiedlichen Materialien bestehen.

5. Vorrichtung nach mindestens einem der Ansprüche 2 bis 4,
**dadurch gekennzeichnet,**
**dass** der Temperatursensor (1) im Wesentlichen aus Platin besteht.

6. Vorrichtung nach Anspruch 4 oder 5,
**dadurch gekennzeichnet,**
**dass** der erste elektrische Leiter (2) im Wesentlichen aus Platin besteht,
und
**dass** der zweite elektrische Leiter (3) im Wesentlichen aus Platin mit einem Anteil von Rhodium besteht.

7. Vorrichtung nach Anspruch 4 oder 5,
**dadurch gekennzeichnet,**
**dass** der erste elektrische Leiter (2) im Wesentlichen aus Nickel besteht,
und
**dass** der zweite elektrische Leiter (3) im Wesentlichen aus Platin besteht.

8. Vorrichtung nach Anspruch 4 oder 5,
**dadurch gekennzeichnet,**
**dass** der erste elektrische Leiter (2) im Wesentlichen aus einer Nickel-Chrom-Legierung besteht,
und
**dass** der zweite elektrische Leiter (3) im Wesentlichen aus einer Nickel-Aluminium- Legierung besteht.

## Claims

1. Apparatus for determining and/or monitoring at least the temperature,
wherein at least one temperature sensor (1) is provided, said temperature sensor concerning at least one temperature-dependent resistance element
and
wherein the temperature sensor (1) is connected to at least a first electrical conductor (2),
**characterized in that**
the first electrical conductor (2) and the temperature sensor (1) are designed and harmonized with one another in such a way that when there is a temperature difference between at least one part of the temperature sensor (1) and the electrical conductor (2), the result is a predefinable thermoelectric voltage.

2. Apparatus as claimed in Claim 1,
**characterized in that**
the temperature sensor (1) is connected to at least a second electrical conductor (3),
and
**in that** the first electrical conductor (2) and the second electrical conductor (3) and the temperature sensor (1) are designed and harmonized with one another in such a way that when there is a temperature difference between the conductors (2, 3) and the temperature sensor (1), the result is a predefinable thermoelectric voltage.

3. Apparatus as claimed in Claim 2,
**characterized in that**
at least the first electrical conductor (2) and at least the connection zone (4) of the temperature sensor (1) with the first electrical conductor (2) essentially consist of different materials
and/or
**in that** at least the second electrical conductor (2) and at least the connection zone (4) of the temperature sensor (1) with the second electrical conductor (2) essentially consist of different materials.

4. Apparatus as claimed in at least one of the Claims 2 to 3,
**characterized in that**
the first electrical conductor (2) and the second electrical conductor (3) essentially consist of different materials.

5. Apparatus as claimed in at least one of the Claims 2 to 4,
**characterized in that**
the temperature sensor (1) is essentially made from platinum.

6. Apparatus as claimed in Claim 4 or 5,
**characterized in that**
the first electrical conductor (2) primarily consists of platinum,
and
**in that** the second electrical conductor (3) primarily consists of platinum with a share of rhodium.

7. Apparatus as claimed in Claim 4 or 5,
**characterized in that**
the first electrical conductor (2) primarily consists of nickel,
and
**in that** the second electrical conductor (3) primarily consists of platinum.

8. Apparatus as claimed in Claim 4 or 5,
**characterized in that**
the first electrical conductor (2) primarily consists of a nickel/chromium alloy,
and
**in that** the second electrical conductor (3) primarily consists of a nickel/aluminum alloy.

## Revendications

1. Dispositif destiné à la détermination et/ou la surveillance d'au moins la température,
pour lequel est prévu au moins un capteur de température (1), concernant lequel il s'agit au moins d'un élément résistif dépendant de la température
et
pour lequel le capteur de température (1) est connecté avec au moins un premier conducteur électrique (2),
**caractérisé**
**en ce que** le premier conducteur électrique (2) et le capteur de température (1) sont conçus et assortis l'un à l'autre de telle sorte qu'en présence d'une différence de température entre au moins une partie du capteur de température (1) et le conducteur électrique (2), il en résulte une tension thermoélectrique prédéfinissable.

2. Dispositif selon la revendication 1,
**caractérisé**
**en ce que** le capteur de température (1) est connecté avec au moins un deuxième conducteur électrique (3),
et
**en ce que** le premier conducteur électrique (2) et le deuxième conducteur électrique (3) et le capteur de température (1) sont conçus et assortis l'un à l'autre de telle sorte qu'en présence d'une différence de température entre les conducteurs électriques (2, 3) et le capteur de température (1), il en résulte une tension thermoélectrique prédéfinissable.

3. Dispositif selon la revendication 2,
**caractérisé**
**en ce qu'**au moins le premier conducteur électrique (2) et au moins la zone de connexion (4) du capteur de température (1) avec le premier conducteur électrique (2) sont constitués pour l'essentiel de matériaux différents
et/ou
**en ce qu'**au moins le deuxième conducteur électrique (2) et au moins la zone de connexion (4) du capteur de température (1) avec le deuxième conducteur électrique (2) sont constitués pour l'essentiel de matériaux différents.

4. Dispositif selon au moins l'une des 3 revendications précédentes, **caractérisé**
**en ce que** le premier conducteur électrique (2) et le deuxième conducteur électrique (3) sont constitués pour l'essentiel de matériaux différents.

5. Dispositif selon au moins l'une des 4 revendications précédentes,
**caractérisé**
**en ce que** le capteur de température (1) est constitué pour l'essentiel de platine.

6. Dispositif selon la revendication 4 ou 5,
**caractérisé**
**en ce que** le premier conducteur électrique (2) est constitué pour l'essentiel de platine,
et
**en ce que** le deuxième conducteur électrique (3) est constitué pour l'essentiel de platine avec un part de rhodium.

7. Dispositif selon la revendication 4 ou 5,
**caractérisé**
**en ce que** le premier conducteur électrique (2) est constitué pour l'essentiel de nickel,
et
**en ce que** le deuxième conducteur électrique (3) est constitué pour l'essentiel de platine.

8. Dispositif selon la revendication 4 ou 5,
**caractérisé**
**en ce que** le premier conducteur électrique (2) est constitué pour l'essentiel d'un alliage de nickel-chrome,
et
**en ce que** le deuxième conducteur électrique (3) est constitué pour l'essentiel d'un alliage de nickel-aluminium.
